# EUROPÄISCHE PATENTSCHRIFT

(11) **EP 2 264 323 B1**
(45) Veröffentlichungstag und Bekanntmachung des Hinweises auf die Patenterteilung: **07.08.2013**
(21) Anmeldenummer: 10450102.8
(22) Anmeldetag: 17.06.2010
(51) Int. Cl.: F16B 12/12, E04B 1/18, E04B 1/61, E04B 2/70, E04H 4/00, E04H 17/14, A01G 1/08, E04F 15/02, E04F 19/04, A47C 4/02

(54) **Steckverbindung**
Connector
Connecteur à fiches

(30) Priorität: 17.06.2009 AT 37309 U
(43) Veröffentlichungstag der Anmeldung: 22.12.2010
(73) Patentinhaber: Reiter, Klaus, 9833 Rangersdorf (AT)
(72) Erfinder: Reiter, Klaus, 9833 Rangersdorf (AT)
(74) Vertreter: Beer & Partner Patentanwälte KG

(56) Entgegenhaltungen:
- CH-A- 93 042
- DE-A1- 2 152 599
- DE-A1- 19 732 972
- GB-A- 146 566
- US-A- 1 985 992
- US-A- 3 329 174
- US-A- 5 445 362
- US-A- 5 688 078

## Beschreibung

Die Erfindung betrifft eine Steckverbindung für insbesondere platten- oder leistenförmige Bauteile mit den Merkmalen des einleitenden Teils von Anspruch 1 (US 1 985 992 A).

Häufig stellt sich das Problem, langgestreckte (längliche) Bauteile, wie Leisten oder Platten, beispielsweise solche, die aneinander anliegen, miteinander zu verbinden, um größere, zusammengesetzte Elemente zu bilden.

Die Leisten oder Platten bestehen im Vorliegenden aus Holz (Lärchenholz).

Der Erfindung liegt die Aufgabe zu Grunde, eine Steckverbindung der eingangs genannten Gattung anzugeben, die einfach herzustellen ist und einen einfachen Aufbau besitzt.

Gelöst wird diese Aufgabe erfindungsgemäß mit einer Steckverbindung, welche die Merkmale von Anspruch 1 aufweist.

Bevorzugte und vorteilhafte Ausgestaltungen der erfindungsgemäßen Steckverbindung sind Gegenstand der Unteransprüche.

Da bei der erfindungsgemäßen Steckverbindung ein Kupplungsstab vorgesehen ist, der mit (länglichen, rippenförmigen) Ansätzen in hinterschnittene Nuten der miteinander zu verbindenden Bauteile eingreift, ergibt sich eine sichere Verbindung der beiden Bauteile miteinander. Dies insbesondere, weil die Ansätze eine Querschnittsform aufweisen, die der Querschnittsform der Nuten in den Bauteilen entspricht, sodass eine formschlüssige Verbindung zwischen dem Kupplungsstab und jedem der beiden miteinander zu verbindenden Bauteile erreicht wird. Um zwei Bauteile erfindungsgemäß miteinander zu verbinden, genügt es, den Kupplungsstab bzw. dessen in die Nuten eingreifende Ansätze gleichzeitig oder nacheinander in die Nuten der miteinander zu verbindenden Bauteile einzuschieben.

Mit der erfindungsgemäßen Verbindung können aus aneinandergefügten Bauteilen, die Leisten, Platten oder dgl. sein können, ebene, gewinkelte oder gekrümmte Gebilde (Elemente) hergestellt werden.

Bei der erfindungsgemäßen Steckverbindung bestehen die platten- oder leistenförmigen Bauteile aus Holz, insbesondere Lärchenholz.

Bei der erfindungsgemäßen Steckverbindung bestehen die Kupplungsstäbe aus Holz, insbesondere Lärchenholz.

Die erfindungsgemäße Steckverbindung zeichnet sich dadurch aus, dass in den Bauteilen zu den Stirnflächen hin durchgehende Bohrungen vorgesehen sind, in denen ein Spannelement vorgesehen ist.

Bei der erfindungsgemäßen Steckverbindung sind in Bauteilen Ausnehmungen vorgesehen, in denen Mittel zum Vorspannen des Spannelements vorgesehen sind.

Für das Herstellen gewinkelter Elemente ist im Rahmen der Erfindung vorgesehen, dass die Nuten in zueinander unter einem Winkel, insbesondere einem rechten Winkel, stehenden Seitenflächen der Bauteile vorgesehen sind.

Für das Herstellen gekrümmter Elemente aus Bauteilen können Bauteile verwendet werden, deren Flächen, in welchen die Nuten vorgesehen sind, zueinander unter einem spitzen Winkel stehen. Durch Wahl des Winkels kann der Krümmungsradius der so hergestellten Gebilde (Elemente) definiert werden.

Im Rahmen der Erfindung ist es auch möglich, Elemente (Gebilde) herzustellen, in welchen gekrümmte Abschnitte und gerade Abschnitte vorliegen.

Schließlich ist es auch möglich, durch Wahl der Winkel, unter welchen die Seiten der Bauteile, in denen Nuten vorgesehen sind, an ein und demselben Element, das aus Bauteilen unter Verwenden der erfindungsgemäßen Steckverbindung hergestellt ist, sich kontinuierlich ändernde Krümmungsradien vorzusehen, indem der Winkel zwischen den Flächen, in denen die Nuten vorgesehen sind, kleiner oder größer gewählt ist.

Für endständige Bauteile besteht die Möglichkeit, entweder in der Seite des Bauteils, an welcher der andere Bauteil anzuschließen ist, nur eine Nut vorzusehen, oder aber es werden Bauteile mit zwei (einander gegenüberliegenden) Nuten vorgesehen, wobei die nicht benötigte, z.B. die äußere, Nut durch einen Einsatz in Form eines Stabes verschlossen wird. Dieser Stab kann mit der Seitenfläche des Bauteils bündig abschließen oder aber gegenüber dieser vorstehend angeordnet sein.

Vorteilhaft ist im Rahmen der Erfindung vorgesehen, dass sich die Nuten in den Bauteilen nicht über die gesamte Länge derselben erstrecken, wobei insbesondere in Betracht gezogen ist, dass die Nuten bis zu dem in Gebrauchslage unteren Ende des Bauteils reichen und mit Abstand vom oberen Ende des Bauteils enden.

Mit der erfindungsgemäßen Steckverbindung können problemlos und sicher zusammengefügte größere Elemente (Gebilde) gebildet werden, wobei die Elemente für Bauwerke (Außenwände, Innenwände, Zwischenwände, Decken, Fußböden und Ähnliches) ebenso verwendet werden können, wie für den Möbelbau, beispielsweise für Betten.

Die erfindungsgemäße Steckverbindung kann auch dazu dienen, aus den aneinander gefügten Bauteilen Behälter für Flüssigkeiten, wie Wasserbecken, Schwimmbecken, Schwimmteiche, Wasserbehälter und Ähnliches zu bilden.

Die Erfindung stellt auch eine Ausführungsform zur Verfügung, bei der zusätzlich zu den Kupplungsstäben, welche die formschlüssige Verbindung zwischen den miteinander zu verbindenden Bauteilen herbeiführt, zusätzliche Abdichtungen aus Holzleisten oder Kunststoffleisten (Quellfugenband) vorgesehen sind. Dabei ist in Betracht gezogen, dass die zusätzlichen Abdichtungsleisten in Nuten eingreifen, die zu den einander zugekehrten Stirnflächen der miteinander zu verbindenden Bauteile offen sind. Die Abdichtungsleisten können eine beliebige Querschnittsform haben, bevorzugt ist es, wenn sie eine rechteckige oder flach sechseckige Querschnittsform (aus zwei Trapezen zusammengesetzt) aufweisen. Die Nuten, in denen die Abdichtungsleisten angeordnet sind, haben bevorzugt eine der Querschnittsform der Abdichtungsleiste entsprechende Form.

Die Erfindung stellt auch eine vorteilhafte Ausführungsform zur Verfügung, mit welcher Behälter für Flüssigkeiten, wie Schwimmbecken und Ähnliches, im Bodenbereich mit Hilfe von Folien, wie sie für Schwimmteiche verwendet werden, abgedichtet verschlossen werden können. Diese Folien werden in einer beispielhaften Ausführungsform in ringsum laufende, innen liegende Nuten, in den aus Bauteilen (Leisten) mit Hilfe der erfindungsgemäßen Steckverbindung zusammengefügten Behältern durch Klemmleisten festgelegt.

In einer Ausführungsform kann sich die erfindungsgemäße Steckverbindung dadurch auszeichnen, dass die Nuten in einander gegenüberliegenden Seiten der Bauteile vorgesehen sind.

In einer Ausführungsform kann sich die erfindungsgemäße Steckverbindung dadurch auszeichnen, dass die Nuten in zueinander parallelen Seiten der Bauteile vorgesehen sind.

In einer Ausführungsform kann sich die erfindungsgemäße Steckverbindung dadurch auszeichnen, dass die Seiten der Bauteile, in denen Nuten vorgesehen sind, zueinander unter einen spitzen Winkel stehen.

In einer Ausführungsform kann sich die erfindungsgemäße Steckverbindung dadurch auszeichnen, dass die Seiten der Bauteile, in denen Nuten vorgesehen sind, zueinander unter einem rechten Winkel stehen.

In einer Ausführungsform kann sich die erfindungsgemäße Steckverbindung dadurch auszeichnen, dass die Nuten eine trapezförmige Querschnittsform aufweisen und dass der Kupplungsstab zwei Ansätze mit trapezförmiger Querschnittsform aufweisen.

In einer Ausführungsform kann sich die erfindungsgemäße Steckverbindung dadurch auszeichnen, dass die Ansätze des Kupplungsstabes unmittelbar aneinander grenzen.

In einer Ausführungsform kann sich die erfindungsgemäße Steckverbindung dadurch auszeichnen, dass die Bauteile eine im Wesentlichen quadratische Querschnittsform aufweisen.

In einer Ausführungsform kann sich die erfindungsgemäße Steckverbindung dadurch auszeichnen, dass die Bauteile eine im Wesentlichen rechteckige Querschnittsform aufweisen.

In einer Ausführungsform kann sich die erfindungsgemäße Steckverbindung dadurch auszeichnen, dass die Kanten der Bauteile abgerundet und/oder abgefast sind.

In einer Ausführungsform kann sich die erfindungsgemäße Steckverbindung dadurch auszeichnen, dass Verschlussleisten vorgesehen sind, die in endständige Nuten in Bauteilen aufzunehmen sind.

In einer Ausführungsform kann sich die erfindungsgemäße Steckverbindung dadurch auszeichnen, dass die äußere Fläche der Verschlussleisten mit der endständigen Seite des Bauteils bündig ist.

In einer Ausführungsform kann sich die erfindungsgemäße Steckverbindung dadurch auszeichnen, dass die äußere Fläche der Verschlussleisten gegenüber der endständigen Seite des Bauteils vorsteht.

In einer Ausführungsform kann sich die erfindungsgemäße Steckverbindung dadurch auszeichnen, dass sich die Nuten nur über einen Teil der Länge (Höhe) des Bauteils erstrecken.

In einer Ausführungsform kann sich die erfindungsgemäße Steckverbindung dadurch auszeichnen, dass die Nuten bis zu dem in Gebrauchslage unteren Ende des Bauteils reichen.

In einer Ausführungsform kann sich die erfindungsgemäße Steckverbindung dadurch auszeichnen, dass die Nuten mit Abstand von dem in Gebrauchslage des Bauteils oberen Ende enden.

In einer Ausführungsform kann sich die erfindungsgemäße Steckverbindung dadurch auszeichnen, dass die Bauteile eine andere Feuchte aufweisen als die Kupplungsstäbe.

In einer Ausführungsform kann sich die erfindungsgemäße Steckverbindung dadurch auszeichnen, dass für eine nicht mehr lösbare Steckverbindung ein Holzfeuchteunterschied zwischen Bauteil und Kupplungsstab von etwa 6% vorgesehen ist.

In einer Ausführungsform kann sich die erfindungsgemäße Steckverbindung dadurch auszeichnen, dass zwischen den miteinander verbundenen Bauteilen Leisten eingesetzt sind.

In einer Ausführungsform kann sich die erfindungsgemäße Steckverbindung dadurch auszeichnen, dass die Leisten Quellbänder sind.

In einer Ausführungsform kann sich die erfindungsgemäße Steckverbindung dadurch auszeichnen, dass die Leisten in Nuten eingesetzt sind, die zu den Seitenflächen der Bauteile hin offen sind.

In einer Ausführungsform kann sich die erfindungsgemäße Steckverbindung dadurch auszeichnen, dass die Leisten eine rechteckige oder eine flach sechseckige Querschnittsform aufweisen.

In einer Ausführungsform kann sich die erfindungsgemäße Steckverbindung dadurch auszeichnen, dass im unteren Bereich der Bauteile eine Nut vorgesehen ist, in der dichtend eine Folie festgelegt ist.

In einer Ausführungsform kann sich die erfindungsgemäße Steckverbindung dadurch auszeichnen, dass die Folie in der Nut durch eine Klemmleiste festgelegt ist.

In einer Ausführungsform kann sich die erfindungsgemäße Steckverbindung dadurch auszeichnen, dass die Klemmleiste eine Querschnittsform aufweist, die kleiner ist als der Querschnitt der Nut und dass der Freiraum durch eine Dichtmasse, insbesondere eine aufgeschäumte Dichtmasse, ausgefüllt ist.

In einer Ausführungsform kann sich die erfindungsgemäße Steckverbindung dadurch auszeichnen, dass die offene Seite der Nut durch eine Abdeckleiste verschlossen ist.

In einer Ausführungsform kann sich die erfindungsgemäße Steckverbindung dadurch auszeichnen, dass zwischen aneinander grenzenden Bauteilen, die miteinander durch einen Kupplungsstab verbunden sind, ein Quellband vorgesehen ist.

Weitere Einzelheiten und Merkmale der Erfindung ergeben sich aus der nachstehenden Beschreibung bevorzugter Ausführungsbeispiele unter Bezugnahme auf die Zeichnungen.

Es zeigt:
Fig. 1 einen Bauteil mit Kupplungsleiste in Schrägansicht,
Fig. 2 den Bauteil aus Fig. 1 in Stirnansicht mit eingesetzter Verschlussleiste und Kupplungsleiste,
Fig. 3 ein gewinkeltes Element, das unter Zuhilfenahme der erfindungsgemäßen Steckverbindung hergestellt ist,
Fig. 4 einen Bauteil für eine Verbindung zum Herstellen gekrümmter Elemente,
Fig. 5 den Bauteil aus Fig. 4 in Stirnansicht mit Kupplungsleiste und eingesetzter Abschlussleiste,
Fig. 6 ein Ausführungsbeispiel für ein gekrümmtes Element in Form einer "Kräuterspirale",
Fig. 7 ein plattenförmiges Element,
Fig. 8 in Schrägansicht einen mit Nuten ausgebildeten Bauteil für das Herstellen ebener Elemente,
Fig. 9 einen ausgebildeten Bauteil für das Herstellen von Winkeln in Elementen,
Fig. 10 ein rahmenförmiges Element in Form eines Hochbeetes, wie es unter Zuhilfenahme der Verbindung aus Bauteilen hergestellt worden ist,
Fig. 11 ein weiteres Beispiel für ein unter Zuhilfenahme der Verbindung hergestelltes Element in Form einer Palisade mit einem gekrümmten und zwei geraden Abschnitten,
Fig. 12 eine Draufsicht auf das Element aus Fig. 11,
Fig. 13 eine abgeänderte Ausführungsform einer Steckverbindung in Schrägansicht,
Fig. 14 die Stirnansicht der Ausführungsform von Fig. 13,
Fig. 15 einen Teil eines Behälters für Flüssigkeiten,
Fig. 16 eine Einzelheit zu Fig. 15,
Fig. 17 eine erste Ausführungsform der Anbindung einer Folie an die Umgrenzung (Wand) eines Flüssigkeitsbehälters,
Fig. 18 eine abgeänderte Ausführungsform hierzu und
Fig. 19 in Draufsicht einen unter Verwendung der Steckverbindung hergestellten Flüssigkeitsbehälter.

Ein im Rahmen der Erfindung verwendbarer Bauteil 1 in Form eines Stabes (Leiste) mit im Wesentlichen quadratischer Querschnittsform und abgerundeten Längskanten 3 besitzt an einander gegenüberliegenden, zueinander parallelen Flächen 5 hinterschnittene Nuten 7, die eine trapezförmige Querschnittsform (schwalbenschwanzähnlich) aufweisen. Die Nuten 7 erstrecken sich nur über einen Teil der Länge, sodass sie an einem Ende des Stabes 1 geschlossen und am anderen Ende des Stabes 1 offen sind.

Zum Herstellen der erfindungsgemäßen Verbindung zwischen Bauteilen 1 sind Kupplungsstäbe 11 vorgesehen, die Ansätze 13 aufweisen, die eine Querschnittsform aufweisen, die der Querschnittsform der hinterschnittenen Nuten 7 entspricht, sodass die Kupplungsstäbe 11 mit ihren Ansätzen 13 formschlüssig in die Nuten 7 eingreifen.

Im gezeigten Ausführungsbeispiel besitzt der Kupplungsstab 11 eine Querschnittsform, die aus zwei, mit ihren kürzeren Seiten aneinander liegenden, gleichschenkeligen Trapezen besteht.

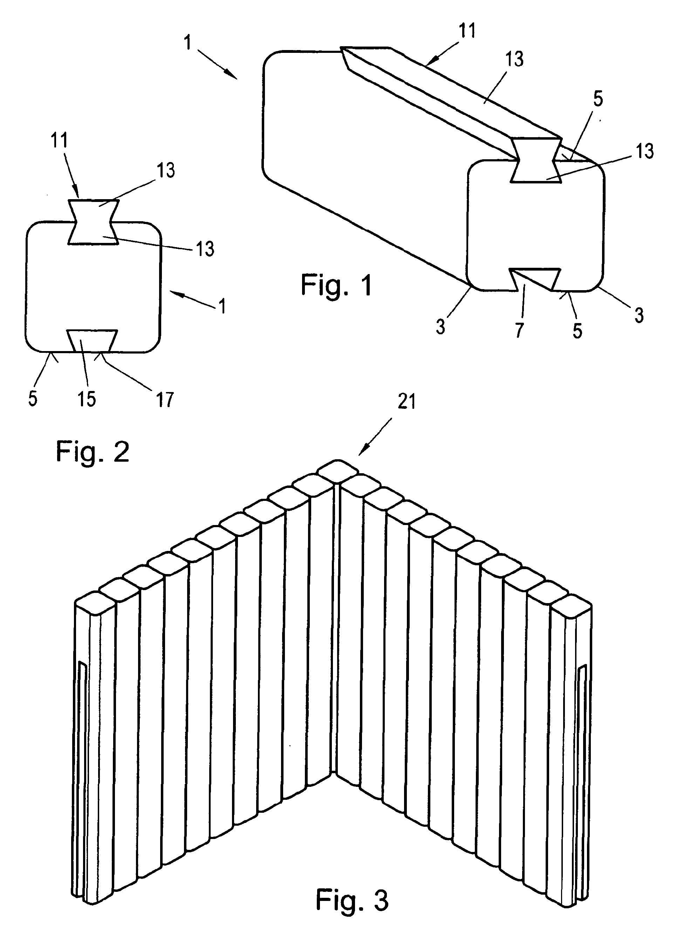

Es ist nicht unbedingt erforderlich, dass die Ansätze 13, so wie in Fig. 1 gezeigt, unmittelbar aneinander grenzen; es können auch Abstände zwischen den Ansätzen 13, welche in die Nuten 7 der Bauteile 1 eingeschoben werden, vorliegen, wenn zwischen miteinander zu verbindenden Bauteilen 1 Spiel, also ein Zwischenraum, vorliegen soll.

Der Werkstoff für die im Rahmen der Erfindung verwendbaren Bauteile 1 und Kupplungsstäbe 11 ist Holz, vornehmlich Lärchenholz.

Fig. 2 zeigt den Bauteil 1 (Stab) aus Fig. 1 mit eingesetztem Kupplungsstab 11 in Stirnansicht, wobei auch gezeigt ist, dass in der Nut 7, die dem Kupplungsstab 11 gegenüberliegt, eine Verschlussleiste 15 vorgesehen ist. Diese Verschlussleiste 15 ist so ausgebildet, dass sie in die Nut 7 formschlüssig hineinpasst, und mit ihrer Außenseite 17 mit der Fläche 5 des Bauteils 1, in deren Nut 7 sie eingesetzt worden ist, bündig abschließt. Es ist aber auch denkbar, Verschlussleisten 15 vorzusehen, die gegenüber der Fläche 5, in der die Nut 7 vorgesehen ist, vorstehend oder rückspringend ausgebildet sind.

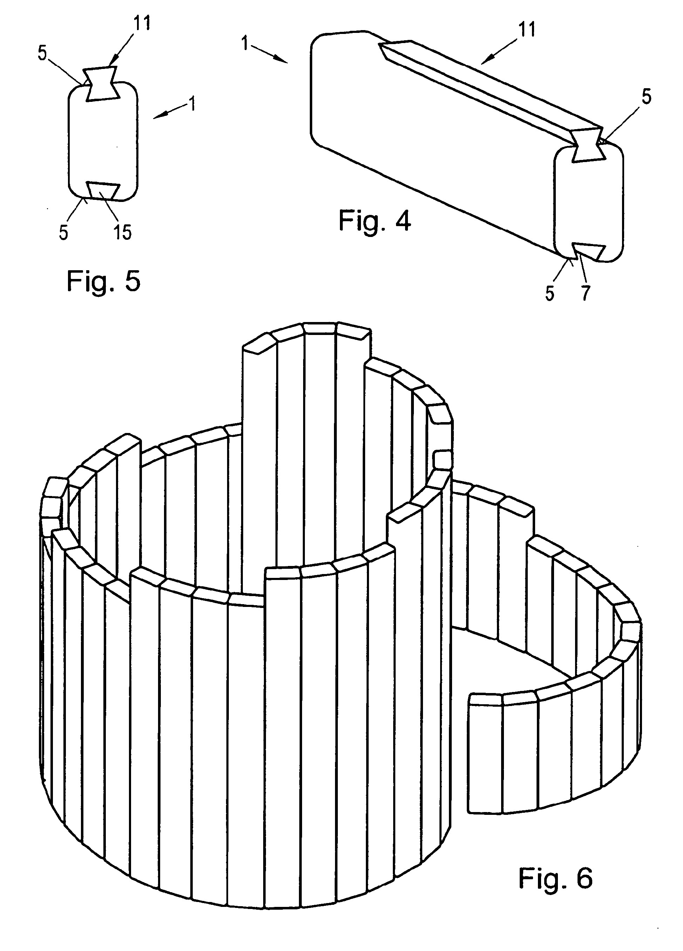

Neben Bauteilen 1, in denen die Flächen 5, in welchen Nuten 7 zur Aufnahme von Kupplungsstäben 11 vorgesehen sind, so wie in Fig. 1 gezeigt, zueinander parallel sind, sind auch Bauteile 1 in Betracht gezogen, bei welchen die Flächen 5, in denen Nuten 7 für die Aufnahme von Kupplungsstäben 11 vorgesehen sind, miteinander unter einem Winkel stehen. So zeigen die Fig. 4 und 5 eine Ausführungsform eines Bauteils 1, bei welcher die Flächen 5, in welchen die Nuten 7 zur Aufnahme von Kupplungsstäben 11 (oder Verschlussleisten 15) vorgesehen sind, zueinander unter einem spitzen Winkel stehen.

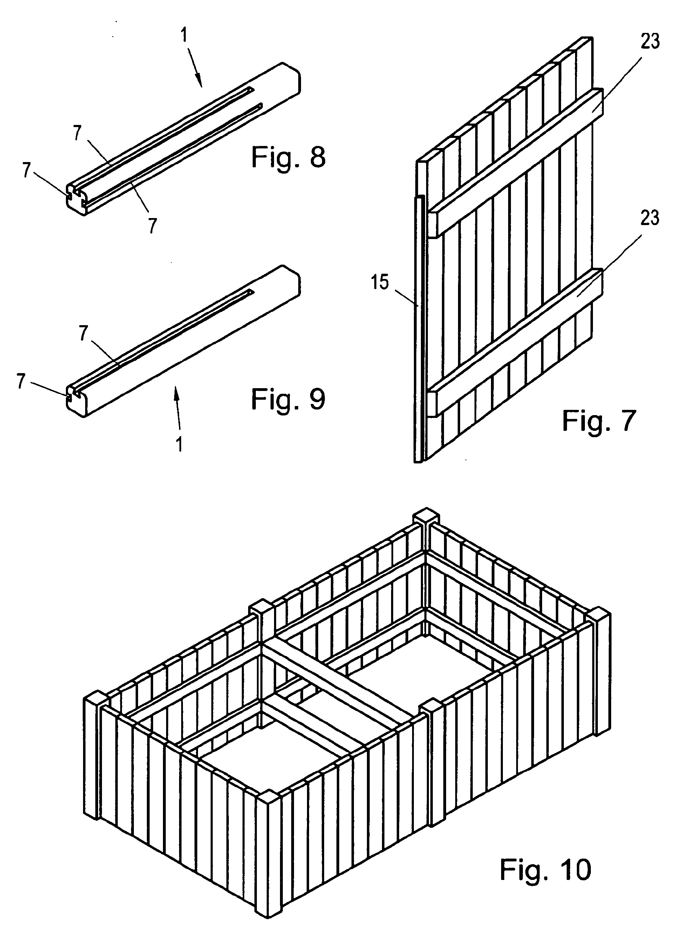

Des Weiteren können Bauteile 1 vorgesehen sein, in welchen die Flächen 5, in welchen Nuten 7 zur Aufnahme von Kupplungsstäben 11 vorgesehen sind, miteinander unter einem rechten Winkel stehen. Dies ist in Fig. 9 gezeigt.

Schließlich ist im Rahmen der Erfindung eine (nicht gezeigte) Ausführungsform in Betracht gezogen, bei welcher in den miteinander zu verbindenden Bauteilen 1 mehr als zwei Nuten 7 vorgesehen sind, beispielsweise drei oder vier Nuten 7, oder bei Bauteilen 1 mit dreieckiger Querschnittsform in zwei oder drei ihrer Flächen 5. Es ist also im Rahmen der Erfindung die Zahl der Nuten 7 in den miteinander zu verbindenden Bauteilen 1 nicht beschränkt. So können Nuten 7 in einer Fläche 5, in zwei Flächen 5 oder in mehr als zwei Flächen 5 oder aber in allen Flächen 5 des Bauteils 1, der mit Hilfe der erfindungsgemäßen Steckverbindung mit weiteren Bauteilen 1 zu kuppeln ist, vorgesehen sein.

Des Weiteren ist darauf hinzuweisen, dass hinsichtlich ihrer Länge, Größe, Querschnittsform und Anzahl der Nuten 7 unterschiedlich ausgebildete Bauteile 1 miteinander gekuppelt werden können, z.B. Bauteile 1, in denen unterschiedliche Anordnungen und Anzahl von Nuten vorgesehen sind.

In Fig. 3 ist ein Element gezeigt, das unter Verwendung der Steckverbindung hergestellt worden ist, wobei Bauteile 1, wie sie in den Fig. 1 und 8 gezeigt sind, vorgesehen sind, um die ebenen Teile zu bilden, und ein Bauteil 1, wie in Fig. 9 gezeigt, verwendet wird, um die Ecke 21 auszubilden.

Das in Fig. 6 gezeigte Element, das als Kräuterspirale ausgebildet ist, wird unter Verwendung von Bauteilen 1 hergestellt, die in den Fig. 4 und 5 gezeigt sind. Dabei ist in Betracht gezogen, dass Bauteile 1 verwendet werden, bei welchen die Flächen, in welchen Nuten 7 zur Aufnahme von Kupplungsstäben 11 vorgesehen sind, mit unterschiedlichen Winkeln zueinander stehen, sodass - wie in Fig. 6 angedeutet - im Element Bereiche mit unterschiedlichen Krümmungsradien hergestellt werden können.

In Fig. 7 ist ein Element gezeigt, das aus Bauteilen 1 gemäß Fig. 1 oder 8 hergestellt worden ist, wobei eine über die Endfläche vorstehende Verschlussleiste 15 dargestellt ist. Um eine erhöhte Festigkeit zu erreichen und ein Verrutschen der Bauteile 1 zueinander in deren Längsrichtung zu vermeiden, können zusätzliche Verbindungsleisten 23 vorgesehen sein. Bei der in Fig. 7 gezeigten Ausführungsform eines Elementes ist die über die Endfläche vorstehende Verschlussleiste 15 wahlweise entweder ein in eine Nut 7 eingesteckter Kupplungsstab 11, oder aber es ist (bevorzugt) die Verschlussleiste 15, die auch zur Verbindung mit weiteren Bauteilen 1 herangezogen werden kann, indem sie in Nuten 7 eingesteckt wird, unmittelbar aus dem endständigen Bauteil 1 des Elementes durch Fräsen oder eine ähnliche Bearbeitung seines freien Randes hergestellt worden.

In Fig. 10 ist noch gezeigt, dass aus Bauteilen 1 unter Verwendung der Steckverbindung rahmenförmige Elemente gebildet werden können, wie sie beispielsweise für Hochbeete eingesetzt werden.

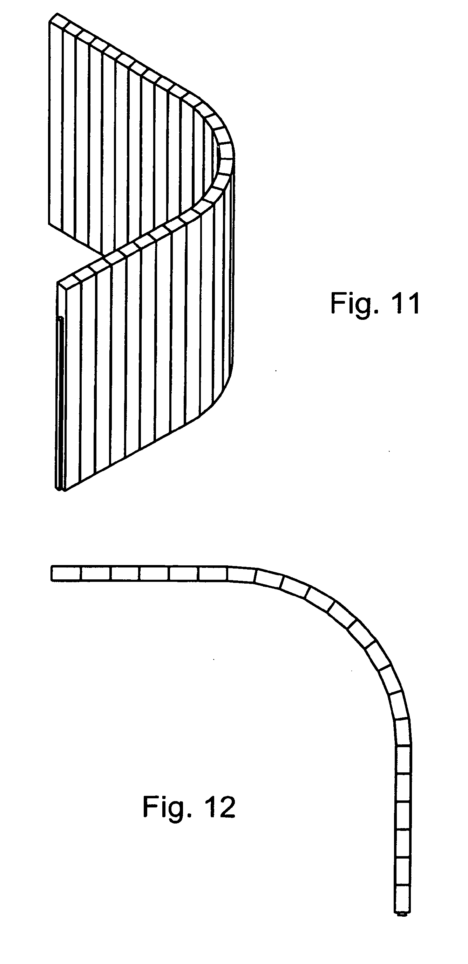

Fig. 11 und 12 zeigen die Möglichkeit, unter Zuhilfenahme der Steckverbindung Elemente herzustellen, die je wenigstens einen gekrümmten und wenigstens einen geraden Bereich aufweisen, wobei in Fig. 11 und 12 gezeigt ist, dass ein gekrümmter Bereich und zwei gerade Bereiche in dem Element vorgesehen sind.

Wie sich aus den Zeichnungen ergibt, können die Bauteile 1, die mit Hilfe der Steckverbindung miteinander zu verbinden sind, Leisten sein. Es ist aber auch in Betracht gezogen, dass die Bauteile 1 Platten oder Stäbe sind. Die miteinander mit Hilfe der Steckverbindung zu Elementen zusammengesetzten Bauteile 1 können identisch oder unterschiedlich, z.B. verschieden lang und/oder verschieden breit, sein.

In Betracht gezogen ist auch eine Ausführungsform, bei welcher der Bauteil 1 mit den Nuten 7 eine Nut 7 in einer zu den Seitenflächen im rechten Winkel stehenden Fläche 5 und eine Nut 7 in einer zu den Seitenflächen unter einem schiefen Winkel stehenden Fläche 5 aufweist.

Die erfindungsgemäße Steckverbindung kann, weil sie aus dem Werkstoff Holz, wahlweise wieder lösbar oder nicht lösbar ausgebildet werden.

Eine wieder lösbare Steckverbindung ergibt sich, wenn die Bestandteile der Steckverbindung, nämlich die platten- oder leistenförmigen Bauteile 1 einerseits und die Kupplungsstäbe 11 andererseits, eine gleiche oder im Wesentlichen gleiche Holzfeuchte aufweisen. Diese Feuchte kann bei Verwendung der erfindungsgemäßen Verbindung im Außenbereich etwa 16% und im Innenbereich etwa 10% betragen.

Wenn eine nicht mehr (ohne Weiteres) lösbare Steckverbindung gewünscht wird, wird ein Holzfeuchteunterschied zwischen den platten- oder leistenförmigen Bauteilen 1 einerseits und den Kupplungsstäben 11 andererseits von etwa 6 % angewendet. Beispielsweise besitzt der Kupplungsstab 11 bei Verwendung im Außenbereich eine Feuchte von etwa 10 bis 12% und der platten- oder leistenförmige Bauteil 1 eine Feuchte von ca. 16 bis 18%. Für den Innenbereich kann der platten- oder leistenförmige Bauteil 1 eine Feuchte von etwa 10 bis 12% aufweisen und der Kupplungsstab 11 eine Feuchte von etwa 6 bis 8%.

Durch den bei nicht lösbaren Steckverbindungen gewählten Unterschied der Holzfeuchte ergibt sich der verstärkte Halt dadurch, dass Feuchte vom zunächst feuchteren Bestandteil der ineinander greifenden Kupplungsstäbe 11 und Bauteile 1 auf den zunächst trockeneren Bestandteil übergeht, sodass ein Quellen des Bestandteils der Steckverbindung, der zunächst weniger Feuchte hatte, eintritt, und dadurch eine Klemmwirkung erreicht wird.

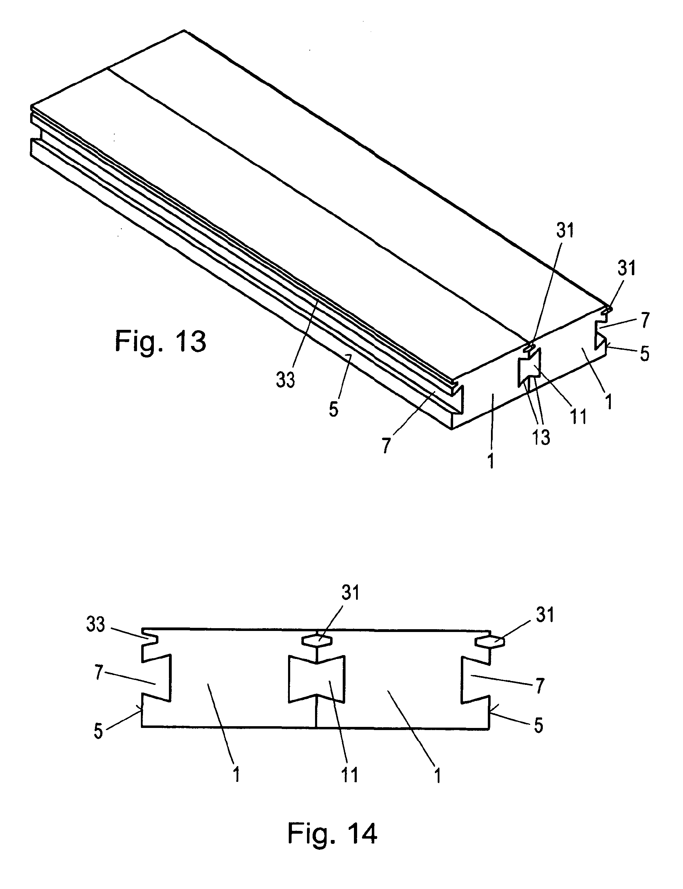

Bei der in den Fig. 13 und 14 gezeigten Ausführungsform sind die zwei Bauteile 1 mit Hilfe des Kupplungsstabes 11 mit seinen zwei Ansätzen 13, der in die längslaufenden Nuten 7 der Bauteile 1 eingreift, miteinander verbunden. Zusätzlich ist bei der in den Fig. 13 und 14 gezeigten Ausführungsform eine Dichtungsleiste 31 vorgesehen, die in Nuten 33, die zu den seitlichen Flächen 5 der Bauteile 1 hin offen sind, eingesetzt sind. Die Dichtungsleisten 31 können aus Holz und/oder Kunststoff, beispielsweise aus quellfähigem Werkstoff, bestehen, sodass sie als Quellfugenband wirken. Die Querschnittsform der Dichtungsleisten 31 ist an sich beliebig und es können rechteckige Querschnittsformen ebenso wie die in den Fig. 13 und 14 gezeigte, flach sechseckige Querschnittsform aufweisen, wobei die Nuten 33 in diesem Fall eine trapezförmige Querschnittsform aufweisen.

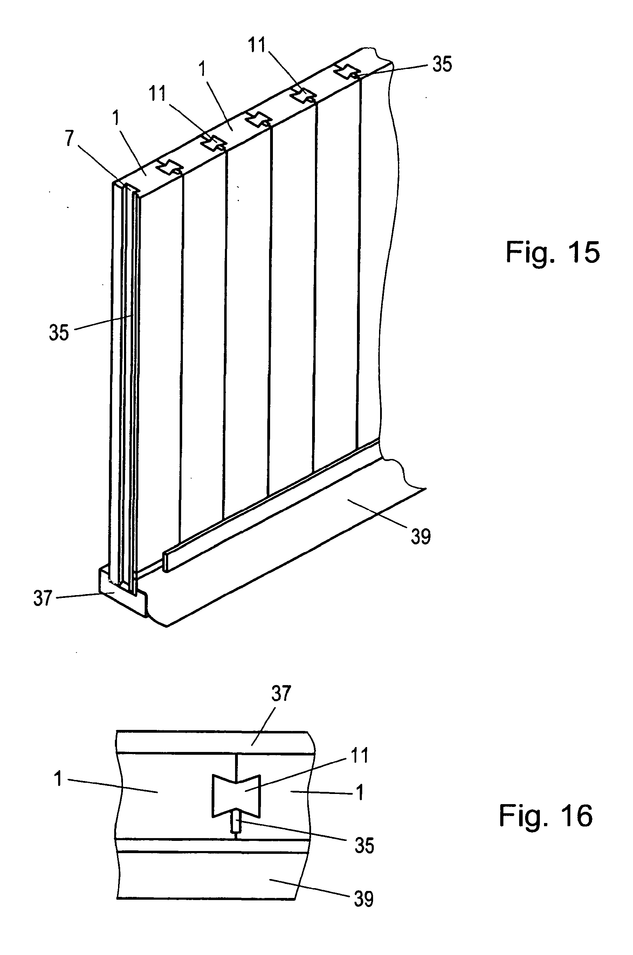

In den Fig. 15 und 16 ist eine mögliche Anwendung der erfindungsgemäßen Steckverbindung auf das Errichten von Flüssigkeitsbehältern, wie Schwimmbecken und Ähnlichem, gezeigt. Auch hier sind wieder leistenförmige Bauteile 1 über die Kupplungsstäbe 11 miteinander zu größeren Einheiten (Elementen) verbunden. Zusätzlich ist in diesem Fall zur Erhöhung der Abdichtung ein Dichtungsstreifen 35 vorgesehen, der in flache Nuten in den zueinander zugekehrten Stirnflächen 5 der Bauteile 1 eingesetzt ist.

Die Bauteile 1, die miteinander zur Umgrenzung des Behälters zusammengefügt sind, stehen unten auf einer Sockelleiste 37 auf, und es ist im unteren Bereich eine Folie 39 dicht an die Umgrenzung aus Bauteilen 1 angeschlossen.

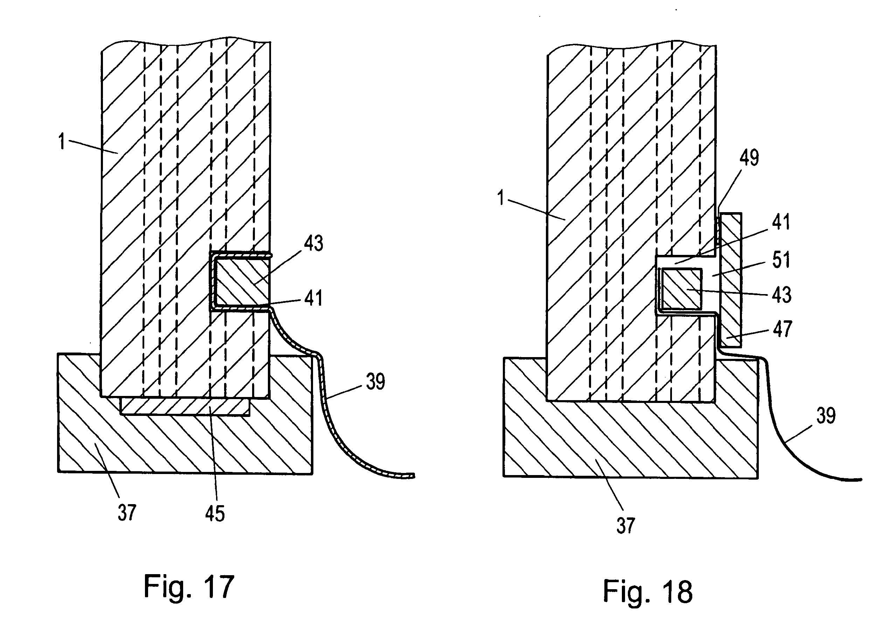

Die Anbindung der Folie 39 wird nachstehend unter Bezugnahme auf die Fig. 17 und 18 in zwei Ausführungsformen beschrieben.

Bei der in Fig. 17 gezeigten Ausführungsform ist im unteren Bereich, der aus den Bauteilen 1 unter Verwendung der erfindungsgemäßen Verbindung hergestellten Umgrenzung des Behälters eine ringsumlaufende Aussparung (Nut) 41 vorgesehen. In diese Nut 41 wird die Folie 39, wie aus Fig. 17 ersichtlich, mit ihrem Rand hineingelegt und dann durch eine Leiste 43 festgelegt. Die Leiste 43 kann aus Holz oder Kunststoff bestehen und wird mit Hilfe von Schrauben (nicht gezeigt) an den Bauteilen 1 befestigt, sodass die Folie 39 gepresst wird und dicht an den Bauteilen 1 anliegt.

Bei der in Fig. 17 gezeigten Ausführungsform ist an der Unterseite der aus den Bauteilen 1 gebildeten Umgrenzung des Behälters ein Quellfugenband 45 vorgesehen, das in eine nach oben offene Nut des Sockels 37 eingesetzt ist.

Eine andere Ausführungsform einer Anbindung einer Folie 39 an die aus Bauteilen 1 gebildete Umgrenzung eines Behälters kann, wie in Fig. 18 dargestellt, ausgeführt sein. In dieser Ausführungsform ist die Klemmleiste 43 kleiner als die Nut 41, sodass bei in der Nut 41 angebrachter und befestigter (angeschraubter) Klemmleiste 43 noch Freiraum 51 verbleibt. Die offene Seite der Nut 41, die auf der Innenseite des Behälters liegt, wird durch eine Abdeckleiste 47 verschlossen, die, beispielsweise mit Hilfe von Schrauben (rostfrei), an der aus den Bauteilen 1 gebildeten Umgrenzung des Behälters befestigt werden kann. Zusätzlich ist zwischen der Abdeckleiste 41 und den Bauteilen 1 im oberen Bereich, also oberhalb der Nut 41 ein Dichtstreifen 49 eingelegt.

Wenn die Abdeckleiste 47 befestigt ist, wird der Freiraum 51 in der Nut 41, also der nicht von der Klemmleiste 43 eingenommene Bereich derselben durch eine Dichtmasse ausgefüllt. Diese Dichtmasse kann eine aufschäumende Dichtmasse sein, die beispielsweise durch Löcher in der Abdeckleiste 47 eingebracht wird. Nachdem die Dichtmasse eingebracht worden ist, können diese Löcher verschlossen werden, beispielsweise indem Verschlussstopfen aus Holz eingesetzt werden.

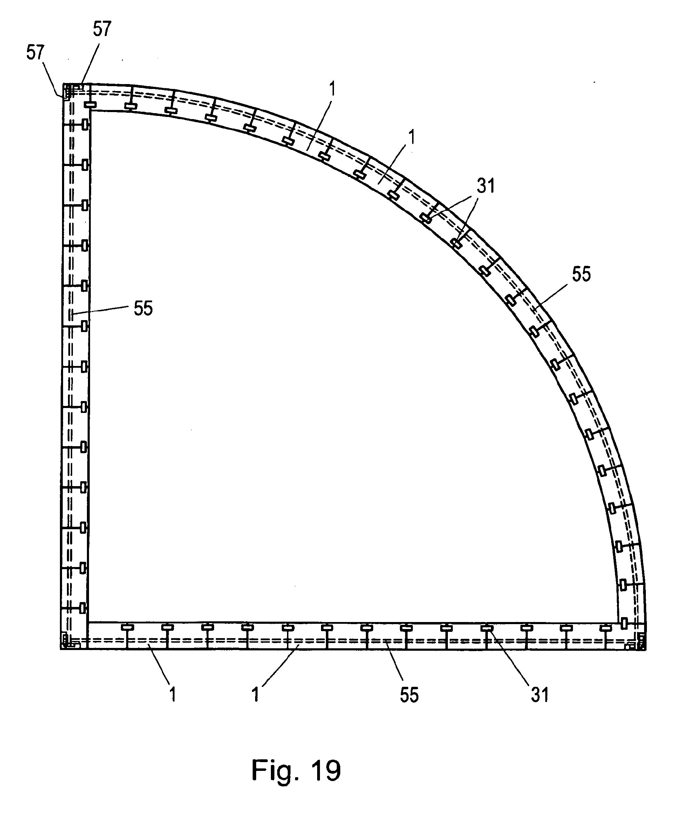

Fig. 19 zeigt eine mögliche Ausführungsform eines Behälters für Flüssigkeiten, beispielsweise eines Schwimmbeckens, das aus mit erfindungsgemäßen Kupplungstäbe 11 (in Fig. 19 nicht gezeigt) miteinander verbundenen, leistenförmigen Bauteilen 1 hergestellt worden ist.

Bezüglich Fig. 19 ist anzumerken, dass die Kupplung der Bauteile 1 mit Hilfe der Kupplungsstäbe 11 nicht dargestellt ist, sondern nur die Anordnung von zusätzlichen Dichtleisten 31 (Quellfugenbänder).

Um eine absolute Dichtheit auch unter allfälligen Belastungen durch eingefüllte Flüssigkeit zu gewährleisten, sind die Bauteile 1 mit Hilfe von Spannelementen 55 aneinander vorgespannt. Diese Spannelemente 55 können Gewindestäbe oder Seile sein. Die Spannelemente sind in durchgehenden Bohrungen in den Bauteilen 1 aufgenommen und können mit Hilfe von Spanngliedern /z.B. Muttern), die in Vertiefungen 57 an den Enden bzw. eckständigen Bauteilen 1 vorgesehen sind, vorgespannt werden.

Es ist ersichtlich, dass Spannelemente 55 auch in zwei oder mehreren Höhen, je nach der Höhe des Behälters, vorgesehen sein können. Beispielsweise sind in den Vertiefungen 57 in Eck- bzw. endständigen Bauteilen 1, Muttern zum Vorspannen der Spannelemente 55 vorgesehen.

Die Elemente, die mit Hilfe der Steckverbindung aus Bauteilen 1 zusammengesetzt sind, können auch als Schalungen für das Herstellen von Betonbauwerken oder Betonbauteilen verwendet werden. Beispielsweise können Schalungen, insbesondere Rundschalungen, die im Tunnelbau beim Betonieren von Rettungsnischen oder Fluchtwegen eingesetzt werden, mit Hilfe der Erfindung hergestellt werden.

## Patentansprüche

1. Steckverbindung mit platten- oder leistenförmigen Bauteilen (1) mit hinterschnittenen Nuten (7) in den miteinander zu verbindenden Bauteilen (1) und mit einem Kupplungsstab (11), der zwei mit den hinterschnittenen Nuten (7) korrespondierende Ansätze (13) aufweist, welche Ansätze (13) in den Nuten (7) aufzunehmen sind, wobei die platten- oder leistenförmigen Bauteile (1) aus Holz, insbesondere Lärchenholz, bestehen, **dadurch gekennzeichnet, dass** der Kupplungsstab (11) aus Holz, insbesondere Lärchenholz, besteht, dass in den Bauteilen (1) zu den Stimflächen hin offene durchgehende Bohrungen vorgesehen sind, in denen ein Spannelement (55) oder mehrere Spannelemente (55) vorgesehen ist/sind und dass die Bauteile (1) durch das Spannelement (55) bzw. die Spannelemente (55) aneinander vorgespannt sind.

2. Steckverbindung nach Anspruch 1, **dadurch gekennzeichnet, dass** das Spannelement (55) ein Gewindestab oder ein Seil ist oder dass die Spannelemente (55) Gewindestäbe oder Seile sind.

3. Steckverbindung nach Anspruch 1 oder 2, **dadurch gekennzeichnet, dass** in Bauteilen (1) Vertiefungen (57) vorgesehen sind, in denen Mittel zum Vorspannen des Spannelements (55) bzw. der Spannelemente (55) vorgesehen sind.

4. Steckverbindung nach einem der Ansprüche 1 bis 3, **dadurch gekennzeichnet, dass** in Vertiefungen (57) in eck- bzw. endständigen Bauteilen (1) Muttern zum Vorspannen des Spannelementes (55) oder der Spannelemente (55) vorgesehen sind.

5. Steckverbindung nach einem der Ansprüche 1 bis 4, **dadurch gekennzeichnet, dass** Spannelemente (55) in zwei oder mehreren Höhen vorgesehen sind.

6. Steckverbindung nach einem der Ansprüche 1 bis 5, **dadurch gekennzeichnet, dass** die Nuten (7) in einander gegenüberliegenden Seiten (5) der Bauteile (1) vorgesehen sind.

7. Steckverbindung nach Anspruch 6, **dadurch gekennzeichnet, dass** die Nuten (7) in zueinander parallelen Seiten (5) der Bauteile (1) vorgesehen sind.

8. Steckverbindung nach Anspruch 6, **dadurch gekennzeichnet, dass** die Seiten (5) der Bauteile (1), in denen Nuten (7) vorgesehen sind, zueinander unter einen spitzen Winkel stehen.

9. Steckverbindung nach einem der Ansprüche 1 bis 5, **dadurch gekennzeichnet, dass** die Seiten (5) der Bauteile (1), in denen Nuten (7) vorgesehen sind, zueinander unter einem rechten Winkel stehen.

10. Steckverbindung nach einem der Ansprüche 1 bis 9, **dadurch gekennzeichnet, dass** die Nuten (7) eine trapezförmige Querschnittsform aufweisen und dass der Kupplungsstab (11) zwei Ansätze (17) mit trapezförmiger Querschnittsform aufweisen.

11. Steckverbindung nach einem der Ansprüche 1 bis 10, **dadurch gekennzeichnet, dass** die Ansätze (13) des Kupplungsstabes (11) unmittelbar aneinander grenzen.

12. Steckverbindung nach einem der Ansprüche 1 bis 11, **dadurch gekennzeichnet, dass** sich die Nuten (7) nur über einen Teil der Länge (Höhe) des Bauteils (1) erstrecken.

13. Steckverbindung nach Anspruch 12, **dadurch gekennzeichnet, dass** die Nuten (7) bis zu dem in Gebrauchslage unteren Ende des Bauteils (1) reichen.

14. Steckverbindung nach Anspruch 12 oder 13, **dadurch gekennzeichnet, dass** die Nuten (7) mit Abstand von dem in Gebrauchslage des Bauteils (1) oberen Ende enden.

15. Steckverbindung nach einem der Ansprüche 1 bis 14, **dadurch gekennzeichnet, dass** zwischen den miteinander verbundenen Bauteilen (1) Leisten (31) eingesetzt sind.

16. Steckverbindung nach Anspruch 15, **dadurch gekennzeichnet, dass** die Leisten (31) in Nuten (33) eingesetzt sind, die zu den Seitenflächen (5) der Bauteile (1) hin offen sind.

17. Steckverbindung nach einem der Ansprüche 1 bis 16, **dadurch gekennzeichnet, dass** im unteren Bereich der Bauteile (1) eine Nut (41) vorgesehen ist, in der dichtend eine Folie (39) festgelegt ist.

18. Steckverbindung nach einem der Ansprüche 1 bis 17, **dadurch gekennzeichnet, dass** zwischen aneinander grenzenden Bauteilen (1), die miteinander durch einen Kupplungsstab (11) verbunden sind, ein Quellband (35) vorgesehen ist.

## Claims

1. A plug-in connection with plate-shaped or strip-shaped components (1) with undercut grooves (7) in the components (1) to be connected to one another and with a coupling bar (11), which comprises two shoulders (13) corresponding to the undercut grooves (7), which shoulders (13) are to be accommodated in the grooves (7), wherein the plate-shaped or strip-shaped components (1) are made of wood, in particular larch wood, **characterised in that** the coupling bar (11) is made of wood, in particular larch wood, that there are provided in the components (1) through-going bores open towards the end faces, in which a clamping element (55) or a plurality of clamping elements (55) is/are provided and that the components (1) are preloaded against one another by the clamping element (55) or the clamping elements (55).

2. The plug-in connection according to claim 1, **characterised in that** the clamping element (55) is a threaded rod or a cable or that the clamping elements (55) are threaded rods or cables.

3. The plug-in connection according to claim 1 or 2, **characterised in that** recesses (57) are provided in the components (1), in which recesses means for preloading the clamping element (55) or the clamping elements (55) are provided.

4. The plug-in connection according to any one of claims 1 to 3, **characterised in that** nuts for preloading the clamping element (55) or the clamping elements (55) are provided in recesses (57) in components (1) located in a corner or at an end.

5. The plug-in connection according to any one of claims 1 to 4, **characterised in that** clamping elements (55) are provided at two or more heights.

6. The plug-in connection according to any one of claims 1 to 5, **characterised in that** the grooves (7) are provided in mutually opposite sides (5) of the components (1).

7. The plug-in connection according to claim 6, **characterised in that** the grooves (7) are provided in mutually parallel sides (5) of the components (1).

8. The plug-in connection according to claim 6, **characterised in that** the sides (5) of the components (1) in which grooves (7) are provided stand at an acute angle to one another.

9. The plug-in connection according to any one of claims 1 to 5, **characterised in that** the sides (5) of the components (1) in which grooves (7) are provided stand at a right angle to one another.

10. The plug-in connection according to any one of claims 1 to 9, **characterised in that** the grooves (7) have a trapezoidal cross-sectional shape and that the coupling bar (11) comprises two shoulders (17) with a trapezoidal cross-sectional shape.

11. The plug-in connection according to any one of claims 1 to 10, **characterised in that** the shoulders (13) of the coupling bar (11) lie directly adjacent to one another.

12. The plug-in connection according to any one of claims 1 to 11, **characterised in that** the grooves (7) extend only over a part of the length (height) of the component (1).

13. The plug-in connection according to claim 12, **characterised in that** the grooves (7) extend up to the - in the position of use - lower end of the component (1).

14. The plug-in connection according to claim 12 or 13, **characterised in that** the grooves (7) end at a distance from the - in the position of use of the component (1) - upper end.

15. The plug-in connection according to any one of claims 1 to 14, **characterised in that** strips (31) are inserted between the components (1) connected to one another.

16. The plug-in connection according to claim 15, **characterised in that** the strips (31) are inserted in grooves (33), which are open towards the side faces (5) of the components (1).

17. The plug-in connection according to any one of claims 1 to 16, **characterised in that** a groove (41), in which a film (39) is fixed in a sealing manner, is provided in the lower region of the components (1).

18. The plug-in connection according to any one of claims 1 to 17, **characterised in that** a swell strip (35) is provided between mutually adjacent components (1), which are connected to one another by a coupling bar (11).

## Revendications

1. Assemblage par emboîtement avec des pièces de construction (1) en forme de plateau ou de baguette, avec des rainures contre-dépouillées (7) dans les pièces de construction (1) à assembler et avec une tige d'accouplement (11) comportant deux saillies (13) correspondant aux rainures contre-dépouillées (7), lesdites saillies (13) étant destinées à être admises dans les rainures (7), dans lequel les pièces de construction (1) en forme de plateau ou de baguette sont constituées de bois, en particulier de bois de mélèze, **caractérisé en ce que** la tige d'accouplement (11) est constituée de bois, en particulier de bois de mélèze, **en ce que** les pièces de construction (1) comportent des perçages traversants ouverts vers les surfaces frontales, dans lesquels il est prévu un élément de serrage (55) ou plusieurs éléments de serrage (55), et **en ce que** les pièces de construction (1) sont précontraintes les unes par rapport aux autres par l'élément de serrage (55) ou les éléments de serrage (55).

2. Assemblage par emboîtement selon la revendication 1, **caractérisé en ce que** l'élément de serrage (55) est une tige filetée ou un câble, ou **en ce que** les éléments de serrage (55) sont des tiges filetées ou des câbles.

3. Assemblage par emboîtement selon la revendication 1 ou 2, **caractérisé en ce que** des renfoncements (57), dans lesquels sont prévus des moyens pour la précontrainte de l'élément de serrage (55) ou des éléments de serrage (55), sont prévus dans les pièces de construction (1).

4. Assemblage par emboîtement selon l'une des revendications 1 à 3, **caractérisé en ce que** des écrous pour la précontrainte de l'élément de serrage (55) ou des éléments de serrage (55) sont prévus dans les renfoncements (57) des pièces de construction (1) situées dans les coins ou aux extrémités.

5. Assemblage par emboîtement selon l'une des revendications 1 à 4, **caractérisé en ce que** les éléments de serrage (55) sont prévus sur deux ou plusieurs hauteurs.

6. Assemblage par emboîtement selon l'une des revendications 1 à 5, **caractérisé en ce que** les rainures (7) sont prévues dans des côtés opposés (5) des pièces de construction (1).

7. Assemblage par emboîtement selon la revendication 6, **caractérisé en ce que** les rainures (7) sont prévues dans des côtés parallèles (5) des pièces de construction (1).

8. Assemblage par emboîtement selon la revendication 6, **caractérisé en ce que** les côtés (5) des pièces de construction (1) dans lesquels sont prévues les rainures (7) forment un angle aigu entre eux.

9. Assemblage par emboîtement selon l'une des revendications 1 à 5, **caractérisé en ce que** les côtés (5) des pièces de construction (1) dans lesquels sont prévues des rainures (7) forment un angle droit entre eux.

10. Assemblage par emboîtement selon l'une des revendications 1 à 9, **caractérisé en ce que** les rainures (7) présentent une section transversale trapézoïdale, et **en ce que** la tige d'accouplement (11) comporte deux saillies (17) avec une section transversale trapézoïdale.

11. Assemblage par emboîtement selon l'une des revendications 1 à 10, **caractérisé en ce que** les saillies (13) de la tige d'accouplement (11) sont directement limitrophes.

12. Assemblage par emboîtement selon l'une des revendications 1 à 11, **caractérisé en ce que** les rainures (7) s'étendent sur une partie de la longueur (hauteur) de la pièce de construction (1).

13. Assemblage par emboîtement selon la revendication 12, **caractérisé en ce que** les rainures (7) s'étendent jusqu'à l'extrémité inférieure de la pièce de construction (1) dans la position d'utilisation.

14. Assemblage par emboîtement selon la revendication 12 ou 13, **caractérisé en ce que** les rainures (7) finissent à une certaine distance de l'extrémité supérieure de la pièce de construction (1) dans la position d'utilisation.

15. Assemblage par emboîtement selon l'une des revendications 1 à 14, **caractérisé en ce que** des baguettes (31) sont insérées entre les pièces de construction (1) reliées entre elles.

16. Assemblage par emboîtement selon la revendication 15, **caractérisé en ce que** les baguettes (31) sont insérées dans des rainures (33) ouvertes vers les surfaces latérales (5) des pièces de construction (1).

17. Assemblage par emboîtement selon l'une des revendications 1 à 16, **caractérisé en ce que** dans la région inférieure des pièces de construction (1), il est prévu une rainure (41) dans laquelle est fixée une feuille (39) de manière étanche.

18. Assemblage par emboîtement selon l'une des revendications 1 à 17, **caractérisé en ce qu'**une bande gonflante (35) est prévue entre les pièces de construction (1) adjacentes reliées entre elles par une tige d'accouplement (11).
